# FASCICULE DE BREVET EUROPEEN

(11) **EP 1 136 313 B1**
(45) Date de publication et mention de la délivrance du brevet: **15.09.2004**
(21) Numéro de dépôt: 01400733.0
(22) Date de dépôt: 21.03.2001
(51) Int. Cl.: B60N 2/48

(54) **Unité de réglage pour appui-tête**
Verstelleinheit für Kopfstütze
Adjusting assembly for head rest

(30) Priorité: 22.03.2000 FR 0003630
(43) Date de publication de la demande: 26.09.2001
(73) Titulaire: CENTRE D'ETUDES ET RECHERCHE POUR L'AUTOMOBILE ( CERA), 51100 Reims (FR)
(72) Inventeur: Valerio, Lluis, 08024 Barcelone (ES)
(74) Mandataire: Keib, Gérard

(56) Documents cités:
- EP-A- 0 744 316
- DE-A- 19 730 616
- DE-C- 19 728 618
- DE-U- 29 712 741
- GB-A- 2 326 188

## Description

La présente invention concerne une unité de réglage pour appui-tête, notamment pour véhicule automobile, ledit appui-tête possédant une armature comportant au moins une broche tubulaire susceptible d'être engagée dans un support solidaire du dossier du siège, et plus particulièrement une telle unité du type comprenant des moyens d'accouplement coopérant sur ladite broche et sur ledit support et un organe de manoeuvre monté sur l'appui-tête pour sélectivement accoupler et désaccoupler lesdits moyens d'accouplement afin de régler la position de l'appui-tête par rapport au dossier du siège dans la direction générale de ladite broche, ladite unité comprenant un câble de liaison entre l'organe de manoeuvre et les moyens d'accouplement, ledit câble de liaison courant à l'intérieur de ladite broche tubulaire.

On connaît de telles unités de réglage (cf. notamment le document DE-A-197 30 616).

Les moyens d'accouplement peuvent être constitués d'un doigt rétractable monté sur la broche et susceptible de s'engager sélectivement dans des encoches ménagées sur le support, la solution inverse étant également possible. L'actionnement de l'organe de manoeuvre, par exemple un bouton poussoir, désaccouple les moyens d'accouplement, par exemple en provoquant un retrait du doigt rétractable qui se désengage de l'encoche correspondante. L'appui-tête est alors mobile par rapport au support et donc par rapport au dossier du siège.

Des moyens élastiques réaccouplent les moyens d'accouplement lorsque le réglage souhaité est atteint et que l'actionnement de l'organe de manoeuvre est interrompu.

Une difficulté réside dans la liaison entre l'organe de manoeuvre et les moyens d'accouplement. Cette liaison doit en effet être fiable tout en étant peu onéreuse, et donc la plus simple possible.

Une difficulté plus particulière résulte du fait que la broche est généralement légèrement courbe et qu'on ne peut en conséquence lui adapter simplement les moyens de liaison.

Ledit document DE-A-197 30 616 propose une solution dans laquelle le doigt est directement actionné par un câble. Mais cette solution, notamment du fait de la faible place disponible à l'intérieur de la broche, est difficilement réalisable.

En outre cette technologie, comme celles décrites dans les documents DE-197 28 618 et GB-2 326 188, nécessite un câble gainé notamment de type Bowden ce qui induit un montage compliqué, une augmentation de l'encombrement et une augmentation du coût.

La présente invention vise à pallier ces inconvénients.

Plus particulièrement, l'invention a pour but de fournir une unité de réglage d'appui-tête, notamment pour véhicule automobile, qui soit fiable bien que peu onéreuse.

Encore plus particulièrement, l'invention a pour but de fournir une unité de réglage d'appui-tête qui soit adaptée à une utilisation en combinaison avec un appui-tête à broche courbe.

A cet effet, l'invention a pour objet une unité de réglage pour appui-tête, notamment pour siège de véhicule automobile, ledit appui-tête possédant une armature comportant au moins une broche tubulaire susceptible d'être engagée dans un support solidaire du dossier du siège, ladite unité de réglage comprenant des moyens d'accouplement coopérant sur ladite broche et sur ledit support et un organe de manoeuvre monté sur l'appui-tête pour sélectivement accoupler et désaccoupler lesdits moyens d'accouplement afin de régler la position de l'appui-tête par rapport au dossier du siège dans la direction générale de ladite broche, ladite unité comprenant un câble de liaison entre l'organe de manoeuvre et les moyens d'accouplement, ledit câble de liaison courant à l'intérieur de ladite broche tubulaire,
caractérisée par le fait que le câble exerce un effort dans la direction générale de la broche sur des moyens de transformation dudit effort en un mouvement transversal des moyens d'accouplement, lesdits moyens de transformation étant agencés pour entraîner positivement les moyens d'accouplement pour sélectivement les accoupler ou les désaccoupler.

On notera en premier lieu que l'on entend ici par câble tout organe souple allongé et susceptible de résister à une certaine traction, indépendamment du matériau dans lequel il est réalisé, métal ou polymère par exemple, ainsi que de sa structure, tressée ou non.

Ce câble peut être simplement monté sur l'organe de manoeuvre et sur les moyens d'accouplement. Il peut en outre suivre la courbe de la broche quelle que soit cette courbe.

Dans un mode de réalisation particulier, ledit organe de manoeuvre est un bouton poussoir.

Egalement dans un mode de réalisation particulier, ledit organe de manoeuvre est monté sur ladite armature.

Le bouton poussoir peut notamment être monté sur le côté de l'appui-tête. Il peut également être associé à un dispositif de déverrouillage du coussin d'appui-tête. Il est ainsi possible pour l'occupant du siège de saisir l'appui-tête à deux mains, d'enfoncer le bouton poussoir, et de régler l'appui-tête simultanément en hauteur et en inclinaison.

Dans un premier mode de réalisation de l'invention, les moyens de transformation sont formés d'un levier pivotant par rapport à la broche, ledit levier comprenant un bras sur lequel est fixée l'extrémité du câble opposée audit organe de manoeuvre et un autre bras portant un desdits moyens d'accouplement.

Dans un autre mode de réalisation, les moyens de transformation sont formés d'un ressort à lame courbe dont une extrémité est fixée à l'extrémité du câble opposée audit organe de manoeuvre et dont l'autre extrémité est solidaire de la broche, un desdits moyens d'accouplement étant monté dans la partie médiane dudit ressort..

Lesdits moyens d'accouplement peuvent comprendre un doigt rétractable sous l'action dudit câble et monté à l'intérieur de ladite broche tubulaire avec son extrémité dépassant d'une lumière formée dans la paroi de ladite broche.

Les moyens d'accouplement montés sur ladite broche et l'extrémité du câble opposée audit organe de manoeuvre peuvent être logés dans une douille fixée à l'intérieur de ladite broche tubulaire, une partie des moyens d'accouplement traversant une lumière formée dans la paroi de ladite douille pour coopérer avec les moyens d'accouplement montés sur ledit support.

De préférence, l'unité de réglage selon l'invention comporte des moyens élastiques de rappel s'opposant à l'action dudit organe de manoeuvre.

Ces moyens élastiques de rappel maintiennent l'organe de manoeuvre dans sa position où les moyens d'accouplement sont effectivement accouplés.

On décrira maintenant, à titre d'exemple non limitatif, un mode de réalisation particulier de l'invention, en référence aux dessins schématiques annexés dans lesquels :
- la figure 1 est une vue d'ensemble de face d'un appui-tête de siège de véhicule automobile du type de celui de l'invention, adapté à un dossier de siège ;
- la figure 2 est une vue partielle en coupe transversale de la partie haute d'une unité de réglage selon la présente invention ;
- la figure 3 est une vue similaire à la figure 2, à plus grande échelle, de la partie basse de cette unité selon un premier mode de réalisation de l'invention ; et
- la figure 4 est une vue similaire à la figure 2, de la partie basse de cette unité selon un deuxième mode de réalisation de l'invention.

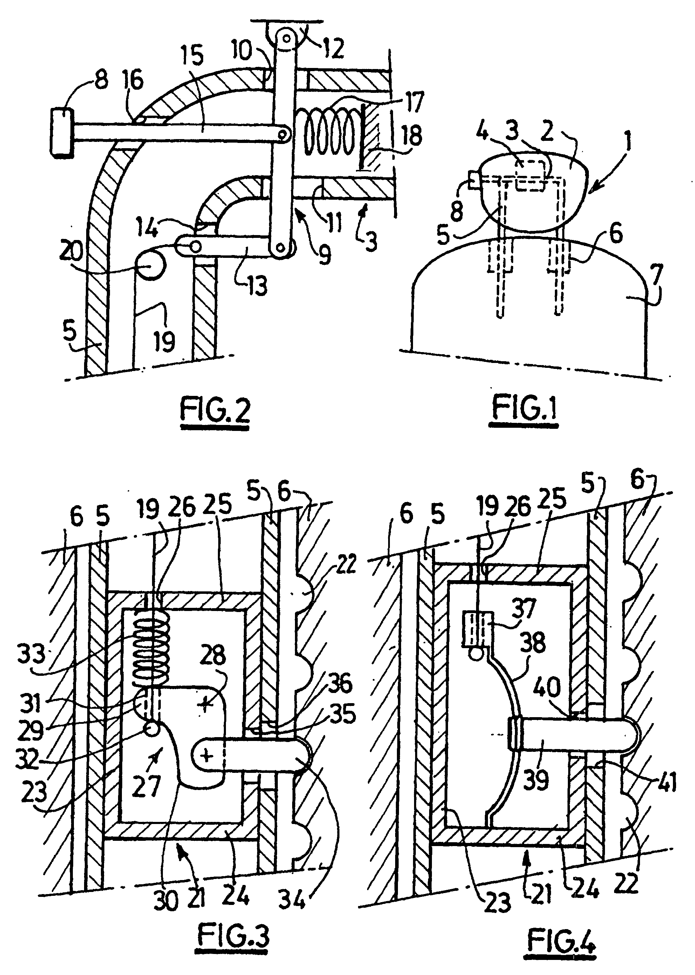

On voit à la figure 1 un appui-tête 1 comportant un coussin 2 monté sur une armature tubulaire 3 en U.

Cette armature 3 comprend une partie centrale coopérant avec des moyens 4 de tout type connu permettant de verrouiller l'inclinaison du coussin par rapport à l'armature 3. Elle comprend également deux broches latérales 5 engagées chacune dans un support 6 solidaire du dossier 7 du siège. Les broches 5 et les supports 6 sont agencés comme décrit ci-dessous pour verrouiller en hauteur l'appui-tête 1 par rapport au dossier 7. Les broches 5 sont légèrement courbées dans leur plan perpendiculaire à celui de la figure 1.

Un bouton poussoir 8 permet de déverrouiller par tout moyen connu les moyens 4 précités, et par les moyens décrits ci-après l'engagement des broches 5 dans les supports 6.

Comme montré à la figure 2, une biellette 9 traverse de part en part par deux fenêtres 10 et 11 la partie centrale de l'armature 3. A une de ses extrémités, la biellette 9 est articulée sur une structure 12 solidaire de l'armature 3. A son autre extrémité, la biellette 9 est articulée à une tige 13 qui pénètre dans le haut de la broche 5 par une fenêtre 14.

La partie centrale de la biellette 9 est articulée sur l'axe 15 du bouton poussoir 8, cet axe étant guidé par tout moyen convenable et pénétrant dans l'armature 3 par une fenêtre 16. L'axe 15 est sensiblement parallèle à la tige 13 et perpendiculaire à la broche 5.

A l'opposé de l'axe 15, la biellette 9 est sollicitée contre l'action de cet axe par un ressort 17 en appui sur une structure 18 solidaire de l'armature 3.

Un câble 19 est fixé à l'extrémité de la tige 13 intérieure à la broche 5. Ce câble passe sur un renvoi 20 solidaire de la broche 5 et descend vers le bas de cette broche.

Ainsi, une poussée sur le bouton 8 provoque une compression du ressort 17, et un pivotement de la biellette 9 et une traction vers le haut sur le câble 19. Lorsque le bouton 8 est relâché, le ressort 17 inhibe cette traction.

On se référera maintenant aux figures 3 et 4.

Une douille 21 est fixée par tout moyen convenable à l'intérieur de la broche 5, à un niveau tel qu'elle se trouve, en utilisation, en vis-à-vis d'un ensemble de crans 22 échelonnés verticalement formés dans une paroi intérieure du support 6.

Cette douille 21 est formée d'une paroi tubulaire 23, d'une paroi transversale supérieure 24 et d'une paroi transversale inférieure 25. La paroi 25 est percée d'un trou 26 permettant le passage de l'extrémité inférieure du câble 19 à l'intérieur de la douille 21.

Dans le mode de réalisation de la figure 3, un levier 27 est articulé sur un axe 28 solidaire de la douille 21. Ce levier 27 possède un bras sensiblement horizontal 29 et un bras sensiblement vertical 30.

Le bras 29 comporte un perçage 31 vertical traversé par l'extrémité du câble 19, bloqué dans l'exemple représenté par une pièce 32 sertie sur le câble. Un ressort hélicoïdal de compression 33 est disposé entre la surface intérieure de la paroi 25 et le dessus du bras de levier 29, entre le trou 26 et le perçage 31. Le ressort 33 est donc ici traversé par le câble 19.

Un doigt rétractable de blocage 34 sensiblement horizontal est articulé sur le bras 30 du levier 27. Ce doigt 34 traverse une lumière 35 formée dans la paroi latérale 23 de la douille 21 et une lumière 36 formée dans la paroi de la broche 5. Il peut ainsi s'engager dans un des crans 22 du support 6.

Lorsqu'une traction vers le haut, c'est-à-dire dans la direction générale de la broche 5, est exercée sur le câble 19 comme exposé en référence à la figure 2, le ressort 33 est comprimé et le levier 27 bascule autour de son axe 28. Dans ce mouvement, le levier rétracte le doigt 34 en direction de l'intérieur de la broche 5, c'est-à-dire dans une direction transversale, et la désengage du cran 22 dans laquelle elle est engagée. L'appui-tête 1 peut ainsi être réglé en hauteur.

Lorsque la traction sur le câble 19 est interrompue, le ressort 33 ramène le levier 27 dans la position représentée à la figure 3 de sorte que le doigt 34 peut s'engager dans le cran 22 le plus proche. Le ressort 33 assure en outre la tension du câble 19.

Dans le mode de réalisation de la figure 4, où les mêmes références ont été utilisées que dans la figure 3 pour les éléments homologues, l'extrémité inférieure du câble 19 est fixée à une ferrure 37 elle-même solidaire d'une extrémité d'un ressort à lame courbe 38. L'autre extrémité du ressort 38 est fixée à la paroi transversale inférieure 24 de la douille 21.

Un doigt rétractable de blocage 39 est fixé au centre de la lame du ressort 38 et traverse comme précédemment des fenêtres respectives 40 et 41 dans la paroi tubulaire 23 de la douille 21 et dans la paroi de la broche tubulaire 5.

Lorsqu'une traction vers le haut est exercée sur le câble 19, la courbure du ressort 38 diminue et ce dernier rétracte le doigt 39 de sorte que la hauteur de l'appui-tête peut être réglée comme précédemment.

Dans ces deux modes de réalisation, on voit que les moyens de transformation 27, 38 entraînent positivement le doigt 34, 39 pour sélectivement l'accoupler et le désaccoupler avec une grande précision.

## Revendications

1. Unité de réglage pour appui-tête, notamment pour siège de véhicule automobile, ledit appui-tête (1) possédant une armature (3) comportant au moins une broche tubulaire (5) susceptible d'être engagée dans un support (6) solidaire du dossier (7) du siège, ladite unité de réglage comprenant des moyens d'accouplement (22, 34 ; 22, 39) coopérant sur ladite broche et sur ledit support et un organe de manoeuvre (8) monté sur l'appui-tête pour sélectivement accoupler et désaccoupler lesdits moyens d'accouplement afin de régler la position de l'appui-tête par rapport au dossier du siège dans la direction générale de ladite broche, ladite unité comprenant un câble de liaison (19) entre l'organe de manoeuvre et les moyens d'accouplement, ledit câble de liaison courant à l'intérieur de ladite broche tubulaire,
**caractérisée par le fait que** le câble (19) exerce un effort dans la direction générale de la broche (5) sur des moyens de transformation (27 ; 38) dudit effort en un mouvement transversal des moyens d'accouplement (34 ; 39), lesdits moyens de transformation (27 ; 38) étant agencés pour entraîner positivement les moyens d'accouplement (34 ; 39) pour sélectivement les accoupler ou les désaccoupler.

2. Unité de réglage selon la revendication 1, dans laquelle ledit organe de manoeuvre (8) est un bouton poussoir.

3. Unité de réglage selon l'une quelconque des revendications 1 et 2, dans laquelle ledit organe de manoeuvre (8) est monté sur ladite armature (3).

4. Unité de réglage selon l'une quelconque des revendications 1 à 3, dans laquelle les moyens de transformation sont formés d'un levier (27) pivotant par rapport à la broche (5), ledit levier (27) comprenant un bras (29) sur lequel est fixée l'extrémité du câble (19) opposée audit organe de manoeuvre et un autre bras (30) portant un (34) desdits moyens d'accouplement.

5. Unité de réglage selon l'une quelconque des revendications 1 à 3, dans laquelle les moyens de transformation sont formés d'un ressort à lame courbe (38) dont une extrémité est fixée à l'extrémité du câble (19) opposée audit organe de manoeuvre (8) et dont l'autre extrémité est solidaire de la broche (5), un (39) desdits moyens d'accouplement étant monté dans la partie médiane dudit ressort.

6. Unité de réglage selon l'une quelconque des revendications 1 à 5, dans laquelle lesdits moyens d'accouplement comprennent un doigt (34 ; 39) rétractable sous l'action dudit câble (19) et monté à l'intérieur de ladite broche tubulaire (5) avec son extrémité dépassant d'une lumière (36; 41) formée dans la paroi de ladite broche.

7. Unité de réglage selon l'une quelconque des revendications 1 à 6, dans laquelle les moyens d'accouplement (34 ; 39) montés sur ladite broche (5) et l'extrémité du câble (19) opposée audit organe de manoeuvre (8) sont logés dans une douille (21) fixée à l'intérieur de ladite broche tubulaire, une partie des moyens d'accouplement traversant une lumière (35; 40) formée dans la paroi (23) de ladite douille pour coopérer avec les moyens d'accouplement (22) montés sur ledit support (6).

8. Unité de réglage selon l'une quelconque des revendications 1 à 7, comportant des moyens élastiques (17) de rappel s'opposant à l'action dudit organe de manoeuvre (8).

## Patentansprüche

1. Einstelleinheit für eine Kopfstütze, insbesondere für den Sitz eines Kraftfahrzeugs, wobei die besagte Kopfstütze (1) ein Gestell (3) aufweist mit mindestens einem rohrförmigen Stift (5), der in einen Träges (6) der Rückenlehne (7) des Sitzes eingeführt werden kann, wobei die besagte Einstelleinheit Kupplungsmittel (22, 34; 22, 39) umfasst, die mit dem besagten Stift und dem besagten Träger zusammenwirken, sowie ein an der Kopfstütze angebrachtes Bedienungsorgan (8), um die besagten Kupplungsmittel an- bzw. abzukuppeln, um die Stellung der Kopfstütze in Bezug auf die Rückenlehne des Sitzes in der Hauptrichtung des besagten Stifts einzustellen, wobei die besagte Einheit ein Verbindungskabel (19) zwischen dem Bedienungsorgan und den Kupplungsmitteln umfasst, wobei das besagte Verbindungskabel innerhalb des besagten rohrförmigen Stifts verläuft,
**dadurch gekennzeichnet, dass** das Kabel (19) auf Umwandlungsmittel (27; 38) eine Kraft in der Hauptrichtung des Stifts (5) ausübt, um die besagte Kraft in eine Querbewegung der Kupplungsmittel (34; 39) umzuwandeln, wobei die besagten Umwandlungsmittel (27; 38) so angeordnet sind, dass sie die Kupplungsmittel (34; 39) positiv mitzunehmen, um sie an- bzw. abzukuppeln.

2. Einstelleinheit nach Anspruch 1, bei der das besagte Bedienungsorgan (8) ein Druckknopf ist.

3. Einstelleinheit nach einem der Ansprüche 1 und 2, bei der das besagte Bedienungsorgan (8) an dem besagten Gestell (3) angeordnet ist.

4. Einstelleinheit nach einem der Ansprüche 1 bis 3, bei der die Umwandlungsmittel aus einem in Bezug auf den Stift (5) schwenkbaren Hebel (27) bestehen, wobei der Hebel (27) einen Arm (29) umfasst, an dem das dem besagten Bedienungsorgan abgewandte Ende des Kabels (19) befestigt ist, sowie einen anderen Arm (30), der eines (34) der besagten Kupplungsmittel trägt.

5. Einstelleinheit nach einem der Ansprüche 1 bis 3, bei der die Umwandlungsmittel aus einer gekrümmten Blattfeder (38) bestehen, deren eines Ende an dem dem besagten Bedienungsorgan (8) abgewandten Ende des Kabels (19) befestigt ist, und deren anderes Ende Bestandteil des Stifts (5) ist, wobei eines (39) der besagten Kupplungsmittel in dem mittleren Teil der besagten Feder angeordnet ist.

6. Einstelleinheit nach einem der Ansprüche 1 bis 5, bei der die besagten Kupplungsmittel einen Finger (34; 39) umfassen, der unter der Einwirkung des besagten Kabels (19) einziehbar und innerhalb des besagten rohrförmigen Stifts (5) angebracht ist, wobei sein Ende eine in der Wand des besagten Stifts gebildete Aussparung (36; 41) überschreitet.

7. Einstelleinheit nach einem der Ansprüche 1 bis 6, bei der die an dem besagten Stift (5) angebrachten Kupplungsmittel (34; 39) und das dem besagten Bedienungsorgan abgewandte Ende des Kabels (19) in einer innerhalb des besagten rohrförmigen Stifts befestigten Hülse (21) gelagert sind, wobei ein Teil der Kupplungsmittel eine in der Wand (23) der besagten Hülse gebildeten Aussparung (35; 40) durchquert, um mit den auf dem besagten Träger (6) angebrachten Kupplungsmitteln (22) zusammenzuwirken.

8. Einstelleinheit nach einem der Ansprüche 1 bis 7, mit federelastischen Mitteln (17), die gegen die Kraft des besagten Bedienungsorgans (8) wirken.

## Claims

1. Adjusting assembly for a head rest, in particular for a motor vehicle seat, said head rest (1) having a frame (3) comprising at least one tubular rod (5) that is capable of being engaged in a support (6) secured to the back (7) of the seat, said adjusting assembly comprising coupling means (22, 34; 22, 39), which cooperate on said rod and on said support, and an operating member (8) mounted on the head rest for selectively coupling and decoupling said coupling means so as to adjust the position of the head rest with respect to the back of the seat in the general direction of said rod, said assembly comprising a connecting cable (19) between the operating member and the coupling means, said connecting cable running inside said tubular rod, **characterized in that** the cable (19) exerts a force in the general direction of the rod (5) on means (27; 38) for transforming said force into a transverse movement of the coupling means (34; 39), said transformation means (27; 38) being designed to positively drive the coupling means (34; 39) so as to selectively couple or decouple them.

2. Adjusting assembly according to Claim 1, in which said operating member (8) is a push-button.

3. Adjusting assembly according to either of Claims 1 and 2, in which said operating member (8) is mounted on said frame (3).

4. Adjusting assembly according to any of Claims 1 to 3, in which the transformation means are formed of a lever (27) which pivots with respect to the rod (5), said lever (27) comprising one arm (29) on which there is fixed the end of the cable (19) opposite said operating member and another arm (30) which bears one (34) of said coupling means.

5. Adjusting assembly according to any of Claims 1 to 3, in which the transformation means are formed of a curved leaf spring (38), one end of which is fixed to the end of the cable (19) opposite said operating member (8) and the other end of which is secured to the rod (5), one (39) of said coupling means being mounted in the middle part of said spring.

6. Adjusting assembly according to any of Claims 1 to 5, in which said coupling means comprise a finger (34; 39) which can be retracted under the action of said cable (19) and is mounted inside said tubular rod (5) with its end protruding from an opening (36; 41) made in the wall of said rod.

7. Adjusting assembly according to any of Claims 1 to 6, in which the coupling means (34; 39) mounted on said rod (5) and the end of the cable (19) opposite said operating member (8) are housed in a case (21) fixed inside said tubular rod, part of the coupling means passing through an opening (35; 40) made in the wall (23) of said case so as to cooperate with the coupling means (22) mounted on said support (6).

8. Adjusting assembly according to any of Claims 1 to 7, comprising elastic return means (17) which oppose the action of said operating member (8).
